# EUROPEAN PATENT APPLICATION

(11) **EP 1 310 891 A2**
(43) Date of publication of application: **14.05.2003**
(21) Application number: 02023893.7
(22) Date of filing: 24.10.2002
(51) Int. Cl.: G06F 17/60

(54) **Risk assessment method**

(30) Priority: 09.11.2001 JP 2001344627
(71) Applicant: Asgent, Inc., Tokyo 103-0016 (JP)
(72) Inventor: Sugimoto, Takahiro, c/o Asgent, Inc., Tokyo 103-0016 (JP)
(74) Representative: Leson, Thomas Johannes Alois, Dipl.-Ing.

(57) **Abstract**

A risk assessment method for executing a risk assessment based on a security policy and the configuration of a current information system. An external API interface converts the security policy, a current system, and information asset data into a data format intended for risk assessment. A risk assessment program executes a risk assessment based on the security policy and the current system. Controls are also selected as appropriate. Depending on the result of the selection, modifications are also made to the security policy etc. The modified data is controls data. This data is used to perform a security simulation. The simulation result reflects the controls adopted by the risk assessment. Consequently, the simulation result obtained takes account of the result of the risk assessment.

## Description

### BACKGROUND OF THE INVENTION

### 1. Field of the Invention

The present invention relates to the construction of a security policy as to an information system, and the risk assessment of the information system.

### 2. Description of the Related Art

With the progression of information and communications technology, information security of information systems belonging to certain organizations is assuming importance. In recent years, attention is being given to the significance of security policies in particular.

In the government of Japan, for example, the Cabinet Office for National Security Affairs and Crisis Management issued "Guidelines for Information Technology Security Policy" in July, 2000, and the central government ministries prepared information security policies.

Various kinds of guidelines for preparing security policies have been proposed internationally. Among the global guidelines receiving attention in recent years is a British standard called BS7799. Part 1 of this standard has also been included in ISO.

BS7799 was established in 1995 by British Standards Institution (BSI). This BS7799 defines fundamental control items (also referred to as controls) , a summary of best practice in information security.

BS7799 consists of two parts, or Part 1: execution guideline for information security management and Part 2: specifications for an information security system. Part 1 shows the best practice, providing the guideline for advising management. Part 2 provides the standard that defines how a management framework is evaluated and certified for conformance. Part 1 (BS7799-1) has been included in ISO as ISO 17799.

Part 2 of this BS7799 chiefly provides requirements for an ISMS (Information Security Management System) framework, and detailed controls that present specifics of the controls on information security.

The requirements for an ISMS framework pertain to the system's security policy, control objectives, controls, document control, record management, and so on. This BS7799 also requires that the appropriate scope of the information security management system be determined and a proper risk assessment be performed in establishing a framework.

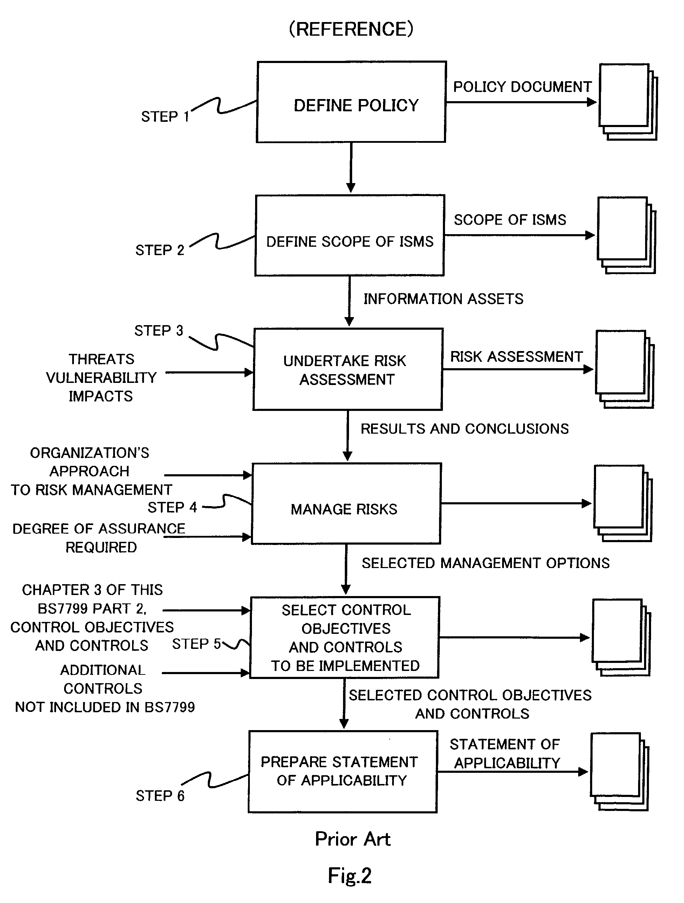

Fig. 2 shows an overview of the establishment of a framework. As shown in this diagram, at step 1, a security policy is defined. At step 2, the scope of the information security management system is determined.

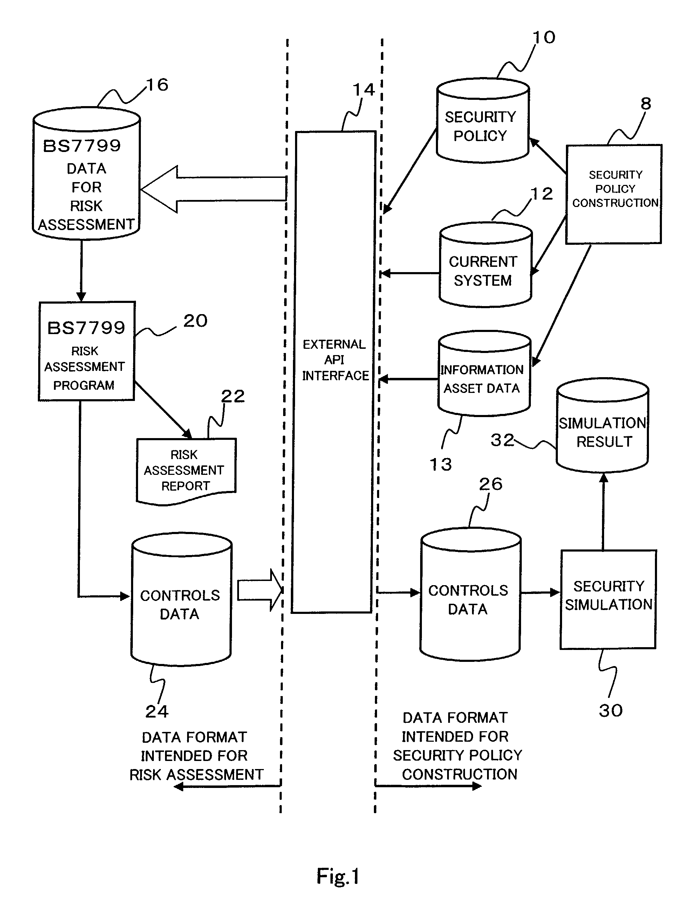

Incidentally, this diagram is a quotation of Fig. 1 in Part 2 of BS7799.

At step 3, a risk assessment is undertaken. At step 4, individual risks are managed.

At step 5, control objectives and controls to be implemented on the information security management system are selected.

At step 6, a statement of applicability for applying the control objectives and controls selected above is prepared.

As above, in establishing a management framework, it is essential to define a security policy and perform a risk assessment (step 3).

Conventionally, the security policy has been constructed by acquiring actual conditions of an information system and conditions of an ideal information system humanly by various means. The security policy and the conditions of the information system have been used to perform a risk assessment humanly by hand.

To perform a risk assessment typically requires that "threats," "vulnerability," "impact," and "asset values" to/of the information assets (property) be identified to determine the degree of risk.

For example, in "Guidelines for Information Technology Security Policy" mentioned above, the risk assessment is defined as one of the procedures for risk analysis. The risk assessment as employed in the document is performed as follows:
(1) Initially, investigate the threats surrounding the information assets. The threats are classified into physical threats, technical threats, human threats, etc. The physical threats include intrusion, destruction, and failure. The technical threats include unauthorized access and tapping. The human threats include operation mistakes, abusing extraction, and misconduct.
(2) Perform a risk assessment on each threat. The assessment is made from the frequency of occurrence of that threat and the scale of damage in cases when the threat occurs. By intuition, the product of the frequency of occurrence and the scale of damage typically is the magnitude of the risk.

In this way, conventional risk assessments have been conducted humanly by hand.

Incidentally, the present inventor has proposed, in Japanese Patent Application Nos. 2000-164819 and 2001-132177, apparatuses and methods for creating a security policy by making inquiries to organization members, and grasping the current conditions from the responses.

As employed in the present application, "organizations" refer to not only business enterprises but also other organizations including government and municipal institutions and various incorporations such as foundations.

As above, risk assessments have conventionally been executed humanly by hand based on constructed security policies and the conditions of the information systems.

It is desirable, however, that risk assessment could be executed automatically based on the configuration of the information systems when the configuration is clear from the information such as the conditions of the information systems. The reason is that the automatic execution could lighten user effort.

In addition, it is convenient that the controls on the information systems could be modified based on the results of the risk assessments before simulations are performed based on the resulting configuration. The reason is that the modifications to the controls could be speedily checked for effects.

### SUMMARY OF THE INVENTION

The present invention has been achieved in view of the foregoing. It is thus an object of the present invention to execute a risk assessment based on a security policy and the configuration of the current information system.

To achieve the foregoing object, the present invention provides a risk assessment method comprising: a first conversion step of converting a security policy and information-system-related information into a first data format based on a predetermined application programming interface, the first data format being a data format intended for risk assessment; and a risk assessment step of executing a risk assessment based on the security policy and information-system-related information converted.

The conversion into the data format intended for risk assessment facilitates executing a risk assessment. In particular, when the risk assessment is executed by a program, the data can be supplied to the program as is.

The present invention also provides the risk assessment method, further comprising: a modification step of modifying either one or both of the security policy and the information-system-related information based on the result of assessment at the risk assessment step; a second conversion step of converting either one or both of the security policy and the information-system-related information modified at the modification step into a second data format based on the application programming interface, the second data format being a data format intended for security policy construction; and a simulation step of performing a simulation as to security based on the security policy and information-system-related information in the second data format.

The conversion into the data format intended for security policy construction facilitates performing a simulation in constructing a security policy. In particular, when the simulation is performed by a program, the data can be supplied to the program as is.

The present invention also provides the foregoing risk assessment method, wherein the simulation at the simulation step checks if security is provided.

Because of such configuration, it is possible to find out the effect of the configuration modified by the risk assessment on security.

The present invention also provides a security policy construction method including the second risk assessment method mentioned above, further comprising a security policy construction step of constructing the security policy reflecting a result of the simulation.

Because of such configuration, it is possible to reflect the result of the risk assessment on the construction of the security policy.

The present invention also provides a program for making a computer execute a first conversion step of converting either one or both of a security policy and information-system-related information into a data format intended for risk assessment based on a predetermined application programming interface.

The present invention also provides a computer program product comprising a computer usable medium having computer readable code thereon ,including program code for making a computer execute a first conversion step of converting either one or both of a security policy and information-system-related information into a data format intended for risk assessment based on a predetermined application programming interface.

Because of such configuration, it is possible to convert the security policy etc. into the data format intended for risk assessment.

The present invention also provides a program for making a computer execute a second conversion step of converting either one or both of a security policy and information-system-related information into a data format intended for security policy construction based on a predetermined application programming interface.

The present invention also provides a computer program product comprising a computer usable medium having computer readable code thereon ,including program code for making a computer execute a second conversion step of converting either one or both of a security policy and information-system-related information into a data format intended for security policy construction based on a predetermined application programming interface.

Such configuration facilitates converting the security policy etc. into the data format intended for security policy construction and performing a simulation in constructing the security policy.

### BRIEF DESCRIPTION OF THE DRAWINGS

Fig. 1 is a conceptual diagram showing a risk assessment operation of an embodiment; and
Fig. 2 is an explanatory diagram showing an overview of the establishment of a BS7799 framework, a quotation of Fig. 1 in BS7799 Part 2.

### DETAILED DESCRIPTION OF THE PREFERRED EMBODIMENT

Hereinafter, an embodiment of the present invention will be described with reference to the drawings.

Fig. 1 shows a conceptual diagram for explaining a risk assessment operation according to the present embodiment.

Initially, a security policy construction program 8 constructs a security policy 10. Such a security policy construction program 8 preferably uses a program that the present inventor has described in Japanese Patent Application No. 2001-132177.

This security policy construction program 8 outputs not only the security policy 10 but also a current system 12 and an information asset 13 that are used for the security policy construction.

The information asset 13 is information indicating the configuration of the information system. This information includes system information, network information, and information that covers human resources, facilities, and equipment. The system information chiefly concerns the host and clients of the information system, and the network information the configuration of the network.

The current system 12 is information on the organization's outline, structure, etc. This information includes information concerning the organizational architecture on the execution and maintenance of the security policy.

The current system 12 and the information asset 13 correspond to an example of the information-system-related information as stated in the claims. The security policy 8, the current system 12, and the information asset 13 are in a data format defined by the security policy construction program (a data format intended for security policy construction).

While the present embodiment deals with the case where the security policy 10 is constructed by the security policy construction program 8, the security policy may be constructed manually.

An external API interface 14 is a program for converting the security policy 10, the current system 12, and the information asset 13 into a data format intended for risk assessment according to the specifications of a predetermined API (Application Programming Interface).

Here, the predetermined API is a protocol including the data format intended for risk assessment, the data format intended for security policy construction, and conversion rules between these formats.

That is, in the present embodiment, "converting into a data format intended for risk assessment according to the specifications of a predetermined API" refers to converting from the data format intended for security policy construction, defined by the foregoing API, to the data format intended for risk assessment. Fig. 1 shows the converted data as data 16 for risk assessment.

In the present embodiment, a risk assessment program 20, a program for executing a risk assessment, is used to execute a risk assessment automatically. The present embodiment is characterized in that the data format understandable to this risk assessment program 20 is defined in the form of the API. When such an API is defined, the security policy 10, the current system 12, and the information asset 13 can be converted according to this API so that the converted security policy 10 etc. are supplied to the risk assessment program 20.

The risk assessment program 20 executes a risk assessment based on the security policy 10, the current system 12, and the information asset 13. The present embodiment deals with the case where this risk assessment program 20 is a program for executing a risk assessment under BS7799 mentioned above.

The risk assessment program 20 executes the foregoing risk assessment. Then, it outputs the result of the assessment, or a risk assessment report 22.

In the risk assessment, controls are also selected as appropriate based on the result of the risk assessment. This is parallel to the description of Fig. 2. Depending on the result of the selection, modifications are also made to the current system 12 and the security policy 10. Fig. 1 shows the modified data as controls data 24.

In the present embodiment, the external API interface 14 converts the controls data 24 into the data format intended for security policy construction. Fig. 1 shows the converted data as controls data 26.

The present embodiment is characterized in that the controls established in the process of risk assessment can be reflected on the construction side of the security policy.

As shown in Fig. 1, a security simulation program 30 performs a security simulation by using the controls data 26. This security simulation program 30 is a program for performing a simulation as to security strength on the basis of the security policy and the controls to check if efficient, effective security is provided.

In the present embodiment, the security simulation program 30 performs a simulation based on the data (controls data 26) that reflects the result of the risk assessment. A simulation result 32 is the result of the simulation that reflects the controls adopted by the risk assessment. This simulation result 32 can be used for security policy construction so that a security policy reflecting BS7799 standards is constructed with facility.

As shown in Fig. 1, in the present embodiment, the security policy construction program 8 may be manually instructed of the strength of the security policy based on the simulation result 32. This allows the construction of a security policy conforming to BS7799 standards.

As has been described, in the present embodiment, the data format intended for security policy construction, the data format intended for risk assessment, and the conversion rules between these data formats are defined in the form of the API. The result of the risk assessment can thus be reflected on the construction of the security policy. As a result, it is possible to reflect the result of the BS7799 risk assessment on the security policy so that a BS7799-based security policy is constructed with facility.

As above, according to the present invention, an application programming interface pertaining to the data format intended for risk assessment and the data format intended for security policy construction is defined, and the data formats are converted on the basis of the application programming interface. Risk assessment can thus be conducted smoothly. Besides, the result of the risk assessment can be incorporated into a security simulation to reflect the result of the risk assessment on the construction of a security policy.

Moreover, according to the present invention, a program for converting the data formats based on the description of the application programming interface is provided. Risk assessment and security policy construction can thus be performed smoothly.

## Claims

1. A risk assessment method comprising:
a first conversion step of converting a security policy and information-system-related information into a first data format based on a predetermined application programming interface, said first data format being a data format intended for risk assessment; and
a risk assessment step of executing a risk assessment based on said security policy and information-system-related information converted.

2. The risk assessment method according to claim 1, further comprising:
a modification step of modifying either one or both of said security policy and said information-system-related information based on the result of assessment at said risk assessment step;
a second conversion step of converting either one or both of said security policy and said information-system-related information modified at said modification step into a second data format based on said application programming interface, said second data format being a data format intended for security policy construction; and
a simulation step of performing a simulation as to security based on said security policy and information-system-related information in said second data format.

3. The risk assessment method according to claim 2,
wherein
said simulation at said simulation step checks if security is provided.

4. A security policy construction method including the risk assessment method according to claim 2, further comprising
a security policy construction step of constructing said security policy reflecting a result of said simulation.

5. A program for making a computer execute a first conversion step of converting either one or both of a security policy and information-system-related information into a data format intended for risk assessment based on a predetermined application programming interface.

6. A program for making a computer execute a second conversion step of converting either one or both of a security policy and information-system-related information into a data format intended for security policy construction based on a predetermined application programming interface.

7. A computer program product comprising a computer usable medium having computer readable code thereon , including program code for making a computer, execute a first conversion step of converting either one or both of a security policy and information-system-related information into a data format intended for risk assessment based on a predetermined application programming interface.

8. A computer program product comprising a computer usable medium having computer readable code thereon ,including program code for making a computer, execute a first conversion step of converting either one or both of a security policy and information-system-related information into a data format intended for risk assessment based on a predetermined application programming interface.
